# FASCICULE DE BREVET EUROPEEN

(11) **EP 3 477 415 B1**
(45) Date de publication et mention de la délivrance du brevet: **07.04.2021**
(21) Numéro de dépôt: 18199896.4
(22) Date de dépôt: 11.10.2018
(51) Int. Cl.: G05D 23/02

(54) **VANNE THERMOSTATIQUE**
THERMOSTATVENTIL
THERMOSTATIC VALVE

(30) Priorité: 24.10.2017 FR 1760017
(43) Date de publication de la demande: 01.05.2019
(73) Titulaire: NOVARES France, 92140 Clamart (FR)
(72) Inventeur: DETREE, Guislain, 59261 Wahagnies (FR)
(74) Mandataire: Delorme, Nicolas

(56) Documents cités:
- EP-A2- 1 715 156
- WO-A1-97/11262
- FR-A1- 2 961 917
- US-A- 5 690 276

## Description

La présente invention concerne le domaine des vannes thermostatiques. Une vanne thermostatique est typiquement utilisée dans le domaine de la régulation thermique automatique pour des circuits de fluide (gaz, eau, huile,...).

De manière connue une vanne thermostatique comprend un corps creux fermé percé d'une première ouverture et d'une deuxième ouverture et comprenant un obturateur séparant les deux ouvertures de manière étanche. L'obturateur est sensible à la température du fluide de manière à s'ouvrir au-dessus d'une température seuil et à se refermer en dessous de ladite température seuil.

Une application illustrative dans le domaine automobile est la réalisation de boîtiers d'entrée d'eau (convergent) ou de boîtiers de sortie d'eau (divergent).

L'obturateur d'une vanne thermostatique comprend typiquement un actionneur thermostatique, telle une capsule à cire, et un clapet actionné par l'actionneur thermostatique. Une capsule à cire comprend un cylindre rempli d'une cire sensible à la température. La cire repousse une tige sous l'effet d'un important changement de volume accompagnant un changement de phase solide/liquide, se produisant à une température seuil. Un tel actionneur thermostatique commande automatiquement la course d'ouverture du clapet à partir d'une température seuil ou température de début d'ouverture. La fermeture du clapet est assurée par un moyen de rappel, tel un ressort, antagoniste de l'actionneur thermostatique. Le clapet présente avantageusement une section passante adaptée au passage du débit nominal (maximal) prévu pour la vanne thermostatique.

Une différence, pouvant être importante, est le plus souvent présente entre les pressions, ainsi qu'entre les températures, observables d'un côté et de l'autre du clapet. Cette pression différentielle entraîne un manque de progressivité à l'ouverture. L'ouverture du clapet s'accompagne d'un fort débit, produisant un refroidissement (ou un réchauffement) rapide. Ceci peut provoquer un dépassement important du point de régulation, entraînant à son tour une réponse à la fermeture de l'actionneur thermostatique et ainsi des oscillations ouverture/fermeture. Ces phénomènes sont préjudiciables en ce qu'ils occasionnent des risques de choc thermique et de sollicitation en pression cyclée des organes du circuit de régulation et donc des risques de défaillance ou de réduction de la durée de vie.

Afin d'éviter un tel inconvénient, il est souhaitable de réduire le débit, afin de ne laisser passer qu'un faible débit, au moins à l'ouverture du clapet. Dans un second temps, il convient de laisser passer le débit nominal, en régime établi.

Des vannes thermostatiques dans le domaine automobile ayant pour objet d'éviter les inconvénients mentionnés précédemment sont divulguées par les documents EP1715156A2, US5690276A et FR2961917A1.

A cet effet, selon un premier aspect, l'invention a pour objet une vanne thermostatique comprenant un corps creux fermé, une première ouverture et une deuxième ouverture débouchant dans le corps et hydrauliquement reliées par une section passante et un obturateur disposé dans la section passante et comprenant un actionneur thermostatique, un moyen de rappel, un clapet apte à ouvrir la section passante lorsque actionné par l'actionneur thermostatique et à fermer la section passante lorsque rappelé par le moyen de rappel, l'actionneur thermostatique étant configuré pour éloigner le clapet d'un siège de clapet formé par le corps, ouvrant ainsi le clapet, et le moyen de rappel étant configuré pour plaquer le clapet contre ledit siège, fermant ainsi le clapet, la vanne thermostatique comprenant encore une bague disposée dans la section passante et mobile entre une position fermée où la bague obture la section passante à l'exception d'une fuite, de section faible devant la section passante et une position ouverte dans laquelle la bague libère la section passante, la bague étant conformée et disposée de telle manière à être en position fermée lors du début de l'ouverture du clapet et pour passer ensuite en position ouverte après une certaine course d'ouverture du clapet.

Selon d'autres caractéristiques, la vanne thermostatique de l'invention comporte une ou plusieurs des caractéristiques optionnelles suivantes considérées seules ou selon toutes les combinaisons possibles :
- en position fermée, le diamètre extérieur de la bague vient en appui contre un épaulement du corps et le diamètre intérieur de la bague est sensiblement ajusté autour de la surface extérieure de l'obturateur,
- la fuite est constituée par un jeu entre le diamètre intérieur de la bague et la surface extérieure de l'obturateur en regard,
- la fuite est constituée par au moins un perçage traversant la bague,
- la surface extérieure de l'obturateur comprend une portée sensiblement cylindrique en regard de la bague afin de permettre la mobilité axiale de la bague entre la position ouverte et la position fermée,
- la surface extérieure de l'obturateur comprend encore au moins une échancrure, afin d'augmenter la fuite lorsque la bague est au droit de ladite au moins une échancrure,
- ladite au moins une échancrure est axialement distante de la bague en position fermée d'un premier décalage, de manière à ne venir au droit de la bague qu'après une course d'ouverture de l'obturateur égale au premier décalage, préférentiellement égal à quelques millimètres,
- l'obturateur comprend encore, à une extrémité de la portée disposée entre la bague et le clapet, une protubérance apte à entraîner axialement la bague vers la position ouverte,
- la protubérance est distante de la bague en position fermée d'un deuxième décalage de manière à ne venir en contact avec la bague qu'après une course d'ouverture de l'obturateur égale au deuxième décalage, préférentiellement égal à quelques millimètres et encore préférentiellement supérieur à l'éventuel premier décalage,
- la protubérance se confond avec le clapet,
- la bague comprend au moins un lamage radial faisant face à la protubérance et outrepassant une projection de la protubérance sur la bague afin de maintenir une communication fluidique avec la fuite,

Selon un autre aspect, l'invention a pour objet un boîtier d'entrée de fluide ou de sortie de fluide, pour régulation thermostatique d'un circuit de fluide, comprenant une telle vanne thermostatique.

Selon une autre caractéristique, l'ouverture du côté de l'actionneur thermostatique est dédoublée et apte à être connectée au circuit de fluide à réguler, et l'autre ouverture est apte à être connectée au radiateur.

Selon un autre aspect, l'invention a pour objet un circuit de régulation thermique automatique d'un fluide comprenant un tel boîtier, où la bague est disposée du côté du clapet présentant majoritairement la plus forte pression

L'invention sera davantage comprise à la lecture de la description non limitative qui va suivre, faite en référence aux figures ci-annexées.
- les figures 1-4 montrent une vanne thermostatique selon l'invention en vue coupée selon un axe longitudinal, avec respectivement : le clapet et la bague fermés (figure 1), le clapet ouvert et la bague fermée (figure 2), le clapet en contact avec la bague (figure 3) et la bague ouverte (figure 4),
- la figure 5 montre un diagramme débit / température comparatif pour une vanne thermostatique avec ou sans bague,
- les figures 6-7 montrent une vanne thermostatique selon l'invention en vue coupée transversale, avec respectivement la bague fermée (figure 6) et la bague ouverte (figure 7),
- la figure 8 illustre un détail d'un mode de réalisation d'une vanne thermostatique selon l'invention,
- la figure 9 illustre un détail d'un autre mode de réalisation d'une vanne thermostatique selon l'invention,
- les figures 10a-b présentent, en vue sectionnelle schématique, un boîtier d'entrée d'eau, respectivement en position fermée et en position ouverte,
- les figures 11a-b présentent, en vue sectionnelle schématique, un boîtier de sortie d'eau, respectivement en position fermée et en position ouverte,
- les figures 12a-b présentent, des schémas de circulation respectivement en configuration froide et chaude.

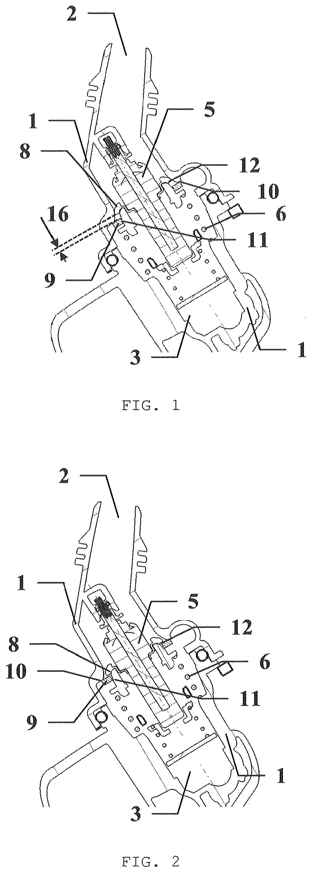

L'invention concerne une vanne thermostatique. Telle qu'illustrée aux figures 1-4, une telle vanne thermostatique comprend un corps 1 creux fermé. Ceci signifie que le corps 1 forme une cavité fermée à l'exclusion d'une première ouverture 2 et d'une deuxième ouverture 3, qui débouchent dans le corps 1 et permettent une entrée et/ou une sortie de fluide. La première ouverture 2 et la deuxième ouverture 3 sont reliées par une section passante. La vanne thermostatique comprend encore un obturateur disposé dans la section passante de manière à séparer sélectivement la première ouverture 2 de la deuxième ouverture 3. Ledit obturateur est configuré pour être fermé en dessous d'une température seuil et ainsi séparer de manière étanche la première ouverture 2 de la deuxième ouverture 3 en fermant la section passante, et être ouvert au-dessus de la température seuil de manière à mettre en relation fluidique la première ouverture 2 de la deuxième ouverture 3, avec la section passante pleinement ouverte et apte à laisser passer un débit nominal/maximal.

Pour cela, l'obturateur comprend un actionneur thermostatique 5, un moyen de rappel 6 et un clapet 8. Le clapet 8 est apte à s'ouvrir lorsqu'actionné par l'actionneur thermostatique 5 et à se fermer lorsque rappelé par le moyen de rappel 6. Un actionneur thermostatique 5 comprend typiquement deux points d'actionnement et est apte à varier la distance et/ou l'effort présent entre ces deux points d'actionnement. Un premier point d'actionnement est solidaire du corps 1 et le deuxième point d'actionnement est solidaire du clapet 8.

Un actionneur thermostatique 5 comprend typiquement un cylindre et une tige engagée dans le cylindre selon son axe et apte à sortir du cylindre. Le premier point d'actionnement, respectivement le deuxième point d'actionnement, est solidaire de la tige. Le deuxième point d'actionnement, respectivement le premier point d'actionnement, est solidaire du cylindre. Tel qu'illustré aux figures 1-4, la tige de l'actionneur thermostatique 5 est fixe relativement au corps 1 de la vanne thermostatique et le corps de l'actionneur thermostatique 5 est mobile et emporte le clapet 8 dont il est solidaire. Il est clair que l'actionneur thermostatique 5 peut être monté dans les deux configurations : tige mobile relativement au corps 1 de la vanne, où le cylindre est fixe, ou tige fixe, où le cylindre est mobile. Les deux configurations sont sensiblement équivalentes.

Lorsque cela n'est pas autrement précisé, il est considéré que l'actionneur thermostatique 5 réalise une extension, par sortie de la tige, lorsque la température augmente et devient supérieure à la température seuil. Aussi l'actionneur thermostatique 5 tend à déplacer le clapet 8 relativement au corps 1 où est placé le point d'actionnement. Dans le cas illustré, l'actionneur thermostatique 5, lors de son extension, éloigne le clapet 8 relativement au corps 1 qui forme le siège du clapet 8 et ouvre le clapet 8. Le moyen de rappel 6, au contraire, replie l'actionneur thermostatique 5, et ferme le clapet 8. Le moyen de rappel 6 est disposé entre le corps 1 de la vanne thermostatique et l'actionneur thermostatique 5. Il est antagoniste à l'actionneur thermostatique 5. Ainsi, l'actionneur thermostatique 5 assure l'ouverture du clapet 8 et le moyen de rappel 6 assure la fermeture du clapet 8 en plaquant ledit clapet 8 contre son siège. Ainsi en fonction de la température, l'actionneur thermostatique 5 s'étend, ouvre le clapet 8 et s'oppose au moyen de rappel 6 en le comprimant lorsque la température dépasse la température seuil, tandis que le moyen de rappel 6 reprend le dessus, repousse et ferme le clapet 8 et réduit l'actionneur thermostatique 5 lorsque la température repasse en-dessous de la température seuil.

Dans le cas où l'actionneur thermostatique 5 est une capsule à cire, un tel moyen de rappel 6 antagoniste est nécessaire, en ce qu'une capsule à cire n'est active qu'en extension. La cire lors de son changement d'état solide/liquide lors d'une montée en température est capable de repousser la tige. Cependant, la cire, lors d'une baisse de température, n'est pas capable de tirer la tige afin de la faire rentrer dans le cylindre.

Selon une caractéristique de l'invention, la vanne thermostatique comprend encore une bague 9. Cette bague 9 est disposée dans la section passante afin d'en réduire la section. La bague 9 est encore mobile entre une position fermée dans laquelle la bague 9 obture la section passante à l'exception d'une fuite, de section faible devant la section passante et une position ouverte dans laquelle la bague 9 libère la section passante. Ainsi en position fermée de la bague 9, la section passante est presque entièrement annulée en ce qu'elle se réduit à une fuite négligeable. Au contraire, en position ouverte de la bague 9, la bague 9 est escamotée de la section passante, qui libérée peut laisser passer le débit nominal/maximal de la vanne thermostatique.

La bague 9 est conformée et disposée de telle manière à être en position fermée lors du début de l'ouverture du clapet 8 et pour passer ensuite en position ouverte après une certaine course d'ouverture du clapet 8. Il s'ensuit que, dans la position fermée, la vanne thermostatique ne laisse passer qu'un débit de fuite très faible, alors même que le clapet 8 débute son ouverture. Ainsi, à l'ouverture du clapet 8, la bague 9 contrôle le débit qui ne passe que par la fuite. En ne permettant qu'un débit très faible immédiatement après l'ouverture du clapet 8, la bague 9 assure une progressivité du débit lors de l'ouverture de la vanne thermostatique. Ensuite la bague 9 s'escamote et le débit peut augmenter.

La figure 1 montre une vanne thermostatique selon l'invention, le clapet 8 en appui contre son siège, ménagé dans le corps 1, est fermé et la bague 9 est en position fermée. Aucun débit ne traverse la section passante.

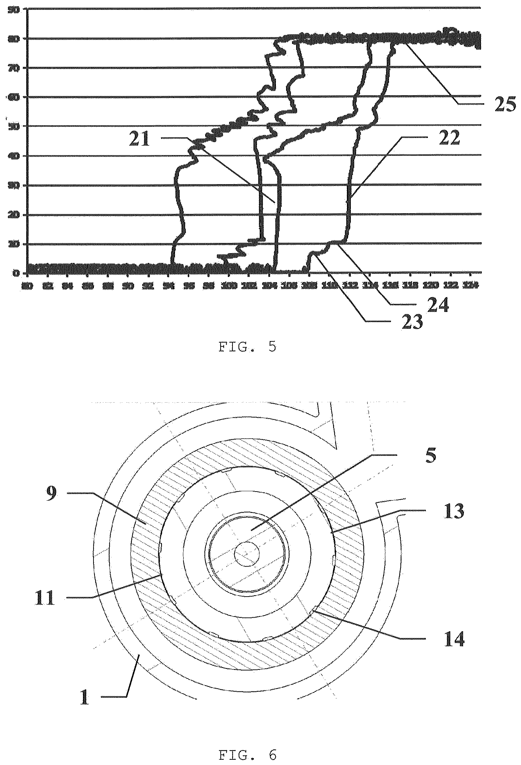

A la figure 2, la température augmente, et l'actionneur thermostatique 5 débute son extension, entraînant le clapet 8, qui décolle de son siège et s'ouvre. Un débit certain pourrait passer entre le clapet 8 et le corps 1. Cependant la bague 9 prend le relais et se substitue au clapet 8. La bague 9 est en position fermée et obture sensiblement la section passante. Le débit traversant la section passante est alors réduit à la fuite laissée par la bague 9. Ceci permet d'obtenir un premier palier intermédiaire 23 de débit, illustré en figure 5.

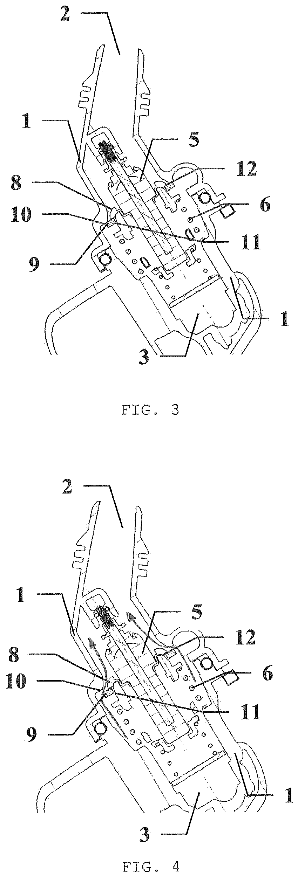

A la figure 3, l'actionneur thermostatique 5 poursuit son extension et avec lui le clapet 8 poursuit sa course d'ouverture. Il convient de remarquer que ces deux éléments coulissent relativement à la bague 9 qui, immobile, reste en position fermée. Le débit traversant la section passante est toujours réduit à la fuite laissée par la bague 9. A l'issue de sa course et de son coulissement relativement à la bague 9, le clapet 8 vient en contact avec la bague 9.

Suite à ce contact clapet 8 / bague 9, l'extension de l'actionneur thermostatique 5 se poursuit, le clapet 8 poursuit sa course et entraîne avec lui la bague 9 qui s'éloigne du corps 1 et passe alors en position ouverte, augmentant ainsi le débit pouvant traverser entre la bague 9 et le corps 1, tel qu'illustré à la figure 4. Le débit est alors égal au débit nominal/maximal de la vanne thermostatique, la bague 9 ne réduisant plus la section passante Ceci permet d'obtenir le palier 25 de débit nominal/maximal, illustré en figure 5.

Lorsque la bague 9 est en position fermée, elle obture sensiblement la section passante. Pour cela, selon une autre caractéristique de l'invention, la partie externe de la bague 9 est en appui contre un épaulement 10 ménagé en regard dans le corps 1. Avantageusement les deux surfaces en regard, de la bague 9 et de l'épaulement 10, sont complémentaires afin d'assurer l'étanchéité. Selon un mode de réalisation, les deux surfaces sont planes et avantageusement lisses. Selon un mode de réalisation optionnel, elles peuvent encore être couvertes de matériau élastomère. Le diamètre intérieur de la bague 9 est sensiblement ajusté autour de la surface extérieure de l'obturateur. La surface extérieure de l'obturateur peut être la surface extérieure de l'actionneur thermostatique 5 ou encore de toute pièce intercalée entre l'actionneur thermostatique 5 et la bague 9. Cet ajustement est tel qu'il laisse subsister un jeu diamétral 13 entre le diamètre intérieur de la bague 9 et la surface extérieure de l'obturateur en regard.

Selon une autre caractéristique de l'invention, ce jeu diamétral 13 constitue la fuite selon un mode de réalisation préféré. Ce jeu peut ainsi être calibré en fonction du besoin en termes de débit souhaité.

Selon une autre caractéristique de l'invention, alternative ou complémentaire, la fuite est constituée par au moins un perçage traversant la bague 9. Ici encore un calibrage du débit est possible en contrôlant la taille du ou des perçages.

Selon une autre caractéristique de l'invention, la surface extérieure de l'obturateur comprend une portée 11 sensiblement cylindrique en regard de la bague 9, avantageusement alésée, afin de réaliser une liaison prismatique et permettre une mobilité axiale de la bague 9 entre la position ouverte et la position fermée. Cette liaison permet avantageusement à la bague 9 de rester immobile et fermée, alors même que le clapet 8 débute sa course d'ouverture et que l'obturateur coulisse relativement à la bague 9.

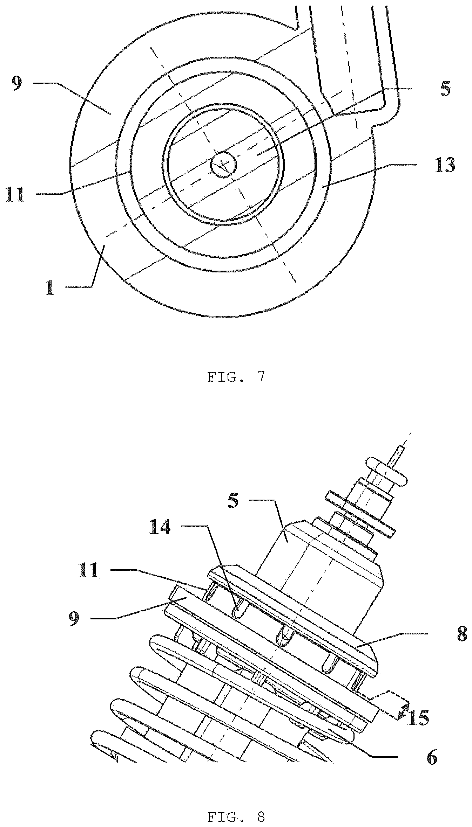

Selon une autre caractéristique de l'invention, plus particulièrement visible aux figures 6 et 8, la surface extérieure de l'obturateur, avantageusement au niveau de la portée 11, comprend encore au moins une échancrure 14. Cette(ces) échancure(s) est/sont telle(s) qu'elle(s) augmente(nt) la section du jeu diamétral 13 présent entre l'obturateur et la bague 9, et ainsi la fuite. Cette augmentation de la section de la fuite est effective lorsque la bague 9 est au droit de ladite au moins une échancrure 14.

Selon une autre caractéristique de l'invention, l'étendue longitudinale, selon l'axe de révolution de la vanne thermostatique, de ladite au moins une échancrure 14 est telle que ladite au moins une échancrure 14 est axialement distante de la bague 9 lorsque cette dernière est en position fermée, d'un premier décalage 15. Ainsi, initialement, lorsque la bague 9 est en position fermée, ladite au moins une échancrure 14 n'est pas au droit (du diamètre intérieur) de la bague 9. Il s'ensuit que la section de la fuite est alors déterminée uniquement par le jeu diamétral présent entre la surface extérieure de l'obturateur et le diamètre intérieur de la bague 9. Après une course d'ouverture de l'obturateur égale au premier décalage 15, ladite au moins une échancrure 14 vient au droit de la bague 9. Il s'ensuit que la section de la fuite est alors déterminée par le jeu diamétral 13 précédemment défini augmenté de la section transversale de ladite au moins une échancrure 14. Ceci permet optionnellement d'obtenir un deuxième palier intermédiaire 24 de débit. Le premier décalage 15 est préférentiellement égal à quelques millimètres.

La figure 5 illustre comparativement sur un diagramme débit/température une vanne thermostatique avec ou sans bague. Les deux courbes de gauche concernent la fermeture de la vanne. Les deux courbes de droite 21, 22, concernent l'ouverture de la vanne. La courbe 21 caractérise une vanne sans bague, selon l'art antérieur, et l'on peut observer une augmentation brutale du débit à la température seuil d'ouverture. Au contraire, la courbe 22 caractérise une vanne avec une bague 9, selon l'invention. Il peut être observé un premier palier 23 de débit correspondant à la fuite égale au seul jeu diamétral 13. Il peut encore être observé un deuxième palier 24 de débit correspondant à la fuite augmentée de la section de ladite au moins une échancrure 14. Enfin, après ouverture de la bague 9, le débit augmente jusqu'à devenir égal au débit nominal/maximal 25 de la vanne thermostatique.

Selon une autre caractéristique de l'invention, la portée 11 comprend encore une protubérance 12. La bague 9 est en permanence située au droit de la portée 11 et donc entre les deux extrémités de la portée 11. La protubérance 12 est avantageusement disposée à l'extrémité de la portée 11 disposée du côté du clapet 8, soit entre le clapet 8 et la bague 9. Cette protubérance 12, en ce qu'elle présente une extension relativement au diamètre de la portée 11 et donc relativement au diamètre intérieur de la bague 9 forme une butée axiale, s'opposant au coulissement de la bague 9. Elle a pour fonction d'arrêter le coulissement de la bague 9 relativement à la portée 11 et d'entraîner axialement la bague 9 vers la position ouverte.

Selon une autre caractéristique de l'invention, la protubérance 12 est distante de la bague 9, lorsque cette dernière est en position fermée, d'un deuxième décalage 16. Ainsi, la protubérance 12 ne vient en contact avec la bague 9 qu'après une certaine course d'ouverture de l'obturateur. Cette course se termine à l'issue du coulissement de l'obturateur relativement à la bague 9, de la longueur de la portée 11, encore égale au deuxième décalage 16. Ainsi à l'issue de la course complète de la bague 9 relativement à l'obturateur, la protubérance 12 vient en butée contre la bague 9 et provoque son ouverture et le passage au débit nominal 25. Le deuxième décalage 16 est préférentiellement égal à quelques millimètres. Selon un mode de réalisation et si le premier décalage 15 existe, le deuxième décalage 16 est encore préférentiellement supérieur audit premier décalage 15.

Selon une autre caractéristique de l'invention, telle qu'illustrée sur les figures, la protubérance 12 se confond avec le clapet 8. Ainsi, c'est le clapet 8, présentant avantageusement un diamètre extérieur supérieur au diamètre de la portée 11, qui lors de sa course d'ouverture vient en contact avec la bague 9 et l'entraîne vers la position ouverte.

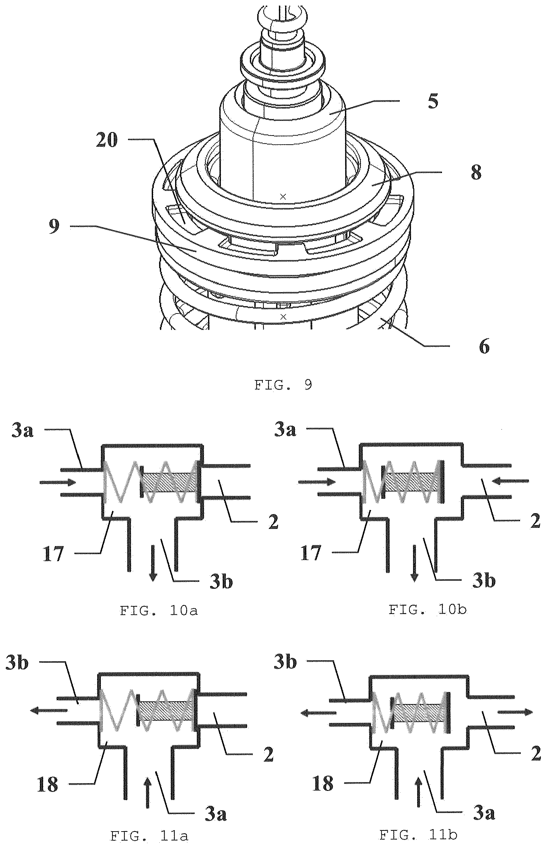

Selon une autre caractéristique de l'invention, plus particulièrement visible à la figure 9, la bague 9 comprend au moins un lamage radial 20. Ledit au moins un lamage radial 20 fait face à la protubérance 12 et/ou au clapet 8. Il est conformé de manière à ce qu'il outrepasse une projection de la protubérance 12/clapet 8 sur la bague 9. Ainsi ce au moins un lamage radial 20 forme une canalisation permettant une communication fluidique avec la fuite, y compris lorsque la protubérance 12 et/ou le clapet 8 vient se plaquer contre la bague 9 et pourrait potentiellement obturer la fuite, particulièrement dans le cas d'une fuite par jeu diamétral 13. L'outrepassement assure que ladite canalisation s'ouvre à une distance de l'axe supérieure au diamètre de la protubérance 12/clapet 8. Aussi, le lamage 20 comprend encore au moins une membrure afin d'empêcher la protubérance 12/clapet 8 de venir se plaquer contre la bague 9.

A noter que dans le mode de réalisation où la fuite est obtenue par un perçage traversant de la bague 9, ce perçage est avantageusement réalisé selon un diamètre supérieur au diamètre de la protubérance 12 / du clapet 8, afin d'éviter l'inconvénient précité.

Il a été jusqu'ici question principalement de l'ouverture, tant du clapet 8 que de la bague 9. La fermeture du clapet 8 est assurée par le moyen de rappel 6 qui replie l'actionneur thermostatique lorsque la température baisse.

Selon un mode opératoire préféré, c'est le débit de fluide à travers la section passante de la vanne thermostatique qui entraîne lors de son passage la bague 9 de la position ouverte vers la position fermée. De manière analogue c'est la différence de pression, avantageusement supérieure du côté de la bague 9 opposé au clapet 8 qui assure l'appui de la bague 9 contre l'épaulement 10 et ainsi réalise et/ou améliore l'étanchéité de la bague 9 en position fermée. Il s'ensuit que selon un mode opératoire préféré, la vanne thermostatique est de préférence disposée dans un circuit de telle manière à ce que, majoritairement dans le temps, la plus forte pression soit disposée du côté de la bague 9 relativement au clapet 8.

Alternativement, par exemple si ce débit ou cette pression n'était pas suffisant à assurer l'une ou l'autre fonction, un moyen de rappel pourrait être ajouté, apte à rappeler la bague 9 en position fermée.

La vanne thermostatique précédemment décrite est avantageusement employée pour construire un boîtier d'entrée de fluide ou un boîtier de sortie de fluide, du type de ceux utilisés pour réaliser une régulation thermostatique d'un circuit de fluide. Les figures 10a-b illustrent le principe d'un boîtier d'entrée de fluide, respectivement fermé ou ouvert. Les figures 11a-b illustrent le principe d'un boîtier de sortie de fluide, respectivement fermé ou ouvert.

Selon une caractéristique, l'ouverture 3, disposée du côté de l'actionneur thermostatique 5, afin d'être du côté de l'élément sensible à la température, est dédoublée en deux ouvertures 3a, 3b et apte à être connectée au circuit de fluide à réguler, et l'autre ouverture 2 est apte à être connectée au circuit radiateur.

Un boîtier d'entrée d'eau 17 comprend une vanne thermostatique. La première ouverture 2 est reliée à la sortie du radiateur 19 et permet un apport d'eau froide. La deuxième ouverture 3 est dédoublée et comprend une entrée 3a par laquelle arrive de l'eau en provenance du moteur M et une sortie 3b par laquelle l'eau repart vers le moteur M, grâce à une pompe P. Lorsque l'eau moteur dépasse la température seuil, la vanne thermostatique s'ouvre permettant un apport d'eau froide. Lorsque l'eau moteur est ou revient en-dessous de la température seuil, la vanne thermostatique se referme et la circulation s'effectue en circuit court entre l'entrée 3a et la sortie 3b.

De manière duale un boîtier de sortie d'eau 18 comprend une vanne thermostatique. La première ouverture 2 est reliée à l'entrée du radiateur 19 et permet une évacuation d'eau chaude. La deuxième ouverture 3 est dédoublée et comprend une entrée 3a par laquelle arrive de l'eau en provenance du moteur M et une sortie 3b par laquelle l'eau repart vers le moteur M, grâce à la pompe P. Lorsque l'eau moteur dépasse la température seuil, la vanne thermostatique s'ouvre permettant une évacuation d'eau chaude. Lorsque l'eau moteur est ou revient en-dessous de la température seuil, la vanne thermostatique se referme et la circulation s'effectue en circuit court entre l'entrée 3a et la sortie 3b.

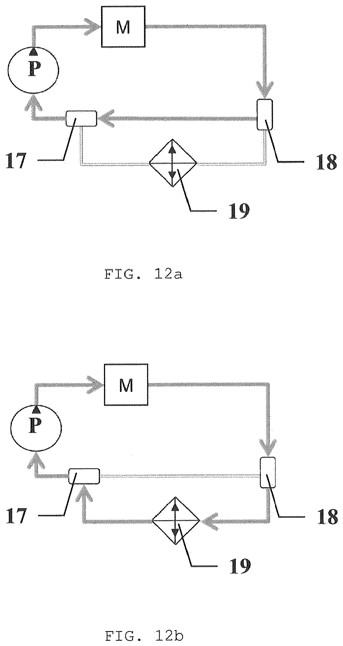

Tel qu'illustré aux figures 12a-b, le boîtier d'entrée 17 réalise un convergent et permet lorsque le fluide devient trop chaud d'ouvrir afin de laisser rentrer du fluide froid en provenance du radiateur 19. De manière symétrique, le boîtier de sortie 18 réalise un divergent et permet lorsque le fluide devient trop chaud d'ouvrir afin de laisser sortir du fluide chaud en direction du radiateur 19. La figure 12a illustre une configuration « froide » où les deux boîtiers 17, 18 sont fermés, réalisant une circulation courte dans le moteur M. La figure 12b illustre une configuration « chaude » où les deux boîtiers 17, 18 sont ouverts, réalisant une circulation étendue au radiateur 19, afin de réduire la température.

## Revendications

1. Vanne thermostatique comprenant un corps (1) creux fermé, une première ouverture (2) et une deuxième ouverture (3) débouchant dans le corps (1) et hydrauliquement reliées par une section passante et un obturateur disposé dans la section passante et comprenant un actionneur thermostatique (5), un moyen de rappel (6), un clapet (8) apte à ouvrir la section passante lorsque actionné par l'actionneur thermostatique (5) et à fermer la section passante lorsque rappelé par le moyen de rappel (6), l'actionneur thermostatique (5) étant configuré pour éloigner le clapet (8) d'un siège de clapet formé par le corps (1), ouvrant ainsi le clapet (8), et le moyen de rappel (6) étant configuré pour plaquer le clapet (8) contre ledit siège, fermant ainsi le clapet (8), la vanne thermostatique comprenant encore une bague (9) disposée dans la section passante et mobile entre une position fermée dans laquelle la bague (9) obture la section passante à l'exception d'une fuite, de section faible devant la section passante et une position ouverte dans laquelle la bague (9) libère la section passante, la bague (9) étant conformée et disposée de telle manière à être en position fermée lors du début de l'ouverture du clapet (8) et pour passer ensuite en position ouverte après une certaine course d'ouverture du clapet (8).

2. Vanne thermostatique selon la revendication précédente, **caractérisée en ce que**, en position fermée, le diamètre extérieur de la bague (9) vient en appui contre un épaulement (10) du corps (1) et le diamètre intérieur de la bague (9) est sensiblement ajusté autour de la surface extérieure de l'obturateur.

3. Vanne thermostatique selon l'une quelconque des revendications précédentes, **caractérisée en ce que** la fuite est constituée par un jeu entre le diamètre intérieur de la bague (9) et la surface extérieure de l'obturateur en regard.

4. Vanne thermostatique selon l'une quelconque des revendications précédentes, **caractérisée en ce que** la fuite est constituée par au moins un perçage traversant la bague (9).

5. Vanne thermostatique selon l'une quelconque des revendications précédentes, **caractérisée en ce que** la surface extérieure de l'obturateur comprend une portée (11) sensiblement cylindrique en regard de la bague (9) afin de permettre une mobilité axiale de la bague (9) entre la position ouverte et la position fermée.

6. Vanne thermostatique selon l'une quelconque des revendications précédentes, **caractérisée en ce que** la surface extérieure de l'obturateur comprend encore au moins une échancrure (14), afin d'augmenter la fuite lorsque la bague (9) est au droit de ladite au moins une échancrure (14).

7. Vanne thermostatique selon la revendication précédente, **caractérisée en ce que** ladite au moins une échancrure (14) est axialement distante de la bague (9) en position fermée d'un premier décalage (15), de manière à ne venir au droit de la bague (9) qu'après une course d'ouverture de l'obturateur égale au premier décalage (15), préférentiellement égal à quelques millimètres.

8. Vanne thermostatique selon la revendication précédente, **caractérisée en ce que** l'obturateur comprend encore, à une extrémité de la portée (11) disposée entre la bague (9) et le clapet (8), une protubérance (12) apte à entraîner axialement la bague (9) vers la position ouverte.

9. Vanne thermostatique selon la revendication précédente, **caractérisée en ce que** la protubérance (12) est distante de la bague (9) en position fermée d'un deuxième décalage (16) de manière à ne venir en contact avec la bague (9) qu'après une course d'ouverture de l'obturateur égale au deuxième décalage (16), préférentiellement égal à quelques millimètres et encore préférentiellement supérieur à l'éventuel premier décalage (15).

10. Vanne thermostatique selon l'une quelconque des deux revendications précédentes, **caractérisée en ce que** la protubérance (12) se confond avec le clapet (8).

11. Vanne thermostatique selon l'une quelconque des revendications 8 à 10, **caractérisée en ce que** la bague (9) comprend au moins un lamage radial (20) faisant face à la protubérance (12) et outrepassant une projection de la protubérance (12) sur la bague (9) afin de maintenir une communication fluidique avec la fuite.

12. Boîtier d'entrée (17) de fluide ou de sortie (18) de fluide, pour régulation thermostatique d'un circuit de fluide, **caractérisé en ce qu'**il comprend une vanne thermostatique selon l'une quelconque des revendications précédentes.

13. Boîtier (17, 18) selon la revendication précédente **caractérisée en ce que** l'ouverture (3a,3b) du côté de l'actionneur thermostatique (5) est dédoublée et apte à être connectée au circuit de fluide à réguler, et l'autre ouverture (2) est apte à être connectée à un radiateur (19).

14. Circuit de régulation thermique automatique d'un fluide, **caractérisé en ce qu'**il comprend un boîtier (17, 18) selon l'une quelconque des deux revendications précédentes, où la bague (9) est disposée du côté du clapet (8) présentant majoritairement la plus forte pression.

## Patentansprüche

1. Thermostatventil, umfassend einen geschlossenen Hohlkörper (1), eine erste Öffnung (2) und eine zweite Öffnung (3), die in den Körper (1) ausmünden und durch einen Durchgangsabschnitt hydraulisch verbunden sind, und einen Verschluss, der in dem Durchgangsabschnitt angeordnet ist und umfassend einen Thermostataktuator (5), ein Rückstellmittel (6), ein Klappe (8), die imstande ist, den Durchgangsabschnitt zu öffnen, wenn von dem Thermostataktuator (5) betätigt, und den Durchgangsabschnitt zu schließen, wenn von dem Rückstellmittel (6) zurückgestellt, wobei der Thermostataktuator (5) ausgelegt ist, um die Klappe (8) von einem von dem Körper (1) gebildeten Klappensitz zu entfernen, wodurch die Klappe (8) geöffnet wird, und das Rückstellmittel (6) ausgelegt ist, um die Klappe (8) an den Sitz anzulegen, wodurch die Klappe (8) geschlossen wird, wobei das Thermostatventil noch einen Ring (9) umfasst, der in dem Durchgangsabschnitt angeordnet und zwischen einer geschlossenen Position, in welcher der Ring (9) den Durchgangsabschnitt mit Ausnahme eines Lecks mit kleinem Querschnitt vor dem Durchgangsabschnitt verschließt, und einer geöffneten Position, in welcher der Ring (9) den Durchgangsabschnitt freigibt, beweglich ist, wobei der Ring (9) derart ausgebildet und angeordnet ist, dass er zu Beginn der Öffnung der Klappe (8) in geschlossenen Position ist und um danach, nach einem bestimmten Öffnungslauf der Klappe (8), in geöffnete Position zu wechseln.

2. Thermostatventil nach vorangehendem Anspruch, **dadurch gekennzeichnet, dass** sich in geschlossener Position der Außendurchmesser des Rings (9) auf einem Absatz (10) des Körpers (1) abstützt und der Innendurchmesser des Rings (9) etwa um die äußere Fläche des Verschlusses angepasst ist.

3. Thermostatventil nach einem der vorangehenden Ansprüche, **dadurch gekennzeichnet, dass** das Leck von einem Spiel zwischen dem Innendurchmesser des Rings (9) und der äußeren Fläche des Verschlusses gegenüber gebildet ist.

4. Thermostatventil nach einem der vorangehenden Ansprüche, **dadurch gekennzeichnet, dass** das Leck von mindestens einer Bohrung gebildet ist, die den Ring (9) durchquert.

5. Thermostatventil nach einem der vorangehenden Ansprüche, **dadurch gekennzeichnet, dass** die äußere Fläche des Verschlusses eine dem Ring (9) zugewandte etwa zylindrische Auflage (11) umfasst, um eine axiale Mobilität des Rings (9) zwischen der geöffneten Position und der geschlossenen Position zu gestatten.

6. Thermostatventil nach einem der vorangehenden Ansprüche, **dadurch gekennzeichnet, dass** die äußere Fläche des Verschlusses noch mindestens eine Ausnehmung (14) umfasst, um das Leck zu vergrößern, wenn der Ring (9) zu der mindestens einen Ausnehmung (14) senkrecht ist.

7. Thermostatventil nach vorangehendem Anspruch, **dadurch gekennzeichnet, dass** die mindestens eine Ausnehmung (14) vom Ring (9) in geschlossener Position um einen ersten Versatz (15) derart axial beabstandet ist, dass sie erst nach einem Öffnungslauf des Verschlusses, der gleich dem ersten Versatz (15), vorzugsweise gleich einigen Millimetern ist, senkrecht zum Ring (9) gelangt.

8. Thermostatventil nach vorangehendem Anspruch, **dadurch gekennzeichnet, dass** der Verschluss noch an einem Ende der Auflage (11), die zwischen dem Ring (9) und der Klappe (8) angeordnet ist, eine Erhebung (12) umfasst, die imstande ist, den Ring (9) axial in die geöffnete Position zu bewegen.

9. Thermostatventil nach vorangehendem Anspruch, **dadurch gekennzeichnet, dass** die Erhebung (12) vom Ring (9) in geschlossener Position um einen zweiten Versatz (16) derart beabstandet ist, dass er erst nach einem Öffnungslauf des Verschlusses, der gleich dem zweiten Versatz (16), vorzugsweise gleich einigen Millimetern und noch vorzugsweiser größer als der eventuelle erste Versatz (15) ist, mit dem Ring (9) in Kontakt kommt.

10. Thermostatventil nach einem der zwei vorangehenden Ansprüche, **dadurch gekennzeichnet, dass** sich die Erhebung (12) mit der Klappe (8) deckt.

11. Thermostatventil nach einem der Ansprüche 8 bis 10, **dadurch gekennzeichnet, dass** der Ring (9) mindestens eine radiale Vertiefung (20) umfasst, die der Erhebung (12) gegenübersteht und über einen Vorsprung der Erhebung (12) auf dem Ring (9) hinausreicht, um eine Fluidkommunikation mit dem Leck aufrechtzuerhalten.

12. Gehäuse für den Fluideinlass (17) oder Fluidauslass (18) zur Thermostatregulierung eines Fluidkreises, **dadurch gekennzeichnet, dass** es ein Thermostatventil nach einem der vorangehenden Ansprüche umfasst.

13. Gehäuse (17, 18) nach vorangehendem Anspruch, **dadurch gekennzeichnet, dass** die Öffnung (3a, 3b) auf der Seite des Thermostataktuators (5) verdoppelt ist und imstande, an den zu regulierenden Fluidkreis angeschlossen zu sein, und die andere Öffnung (2) imstande ist, an einen Heizkörper angeschlossen zu sein (19).

14. Kreis zur automatischen thermischen Regulierung eines Fluids, **dadurch gekennzeichnet, dass** er ein Gehäuse (17, 18) nach einem der zwei vorangehenden Ansprüche umfasst, wobei der Ring (9) auf der Seite der Klappe (8) angeordnet ist, die mehrheitlich den stärksten Druck aufweist.

## Claims

1. A thermostatic valve comprising a closed hollow body (1), a first opening (2) and a second opening (3) leading into the body (1) and hydraulically connected by a through section and a shutter disposed in the through section and comprising a thermostatic actuator (5), a return means (6), a flap (8) able to open the through section when actuated by the thermostatic actuator (5) and to close the through section when returned by the return means (6), the thermostatic actuator (5) being configured to move the flap (8) away from a valve seat formed by the body (1), thus opening the flap (8), and the return means (6) being configured to press the flap (8) against said seat, thus closing the flap (8), the thermostatic valve further comprising a ring (9) disposed in the through section and movable between a closed position in which the ring (9) closes the through section except for a leakage, of small section in front of the through section and an open position in which the ring (9) releases the through section, the ring (9) being shaped and disposed so as to be in the closed position at the start of the opening of the flap (8) and then to switch into the open position after a certain opening travel of the flap (8).

2. The thermostatic valve according to the preceding claim, **characterized in that**, in the closed position, the outer diameter of the ring (9) bears against a shoulder (10) of the body (1) and the inner diameter of the ring (9) is substantially fitted around the outer surface of the shutter.

3. The thermostatic valve according to any one of the preceding claims, **characterized in that** the leakage consists of a clearance between the inner diameter of the ring (9) and the outer surface of the opposite shutter.

4. The thermostatic valve according to any one of the preceding claims, **characterized in that** the leakage consists of at least one bore passing through the ring (9).

5. The thermostatic valve according to any one of the preceding claims, **characterized in that** the outer surface of the shutter comprises a substantially cylindrical bearing surface (11) opposite the ring (9) in order to allow axial mobility of the ring (9) between the open position and the closed position.

6. The thermostatic valve according to any one of the preceding claims, **characterized in that** the outer surface of the shutter further comprises at least one notch (14), in order to increase the leakage when the ring (9) is in line with said at least one notch (14).

7. The thermostatic valve according to the preceding claim, **characterized in that** said at least one notch (14) is axially distant from the ring (9) in the closed position from a first offset (15), so as to come in line with the ring (9) only after an opening travel of the shutter equal to the first offset (15), preferably equal to a few millimeters.

8. The thermostatic valve according to the preceding claim, **characterized in that** the shutter further comprises, at one end of the bearing surface (11) disposed between the ring (9) and the flap (8), a protuberance (12) capable of axially driving the ring (9) towards the open position.

9. The thermostatic valve according to the preceding claim, **characterized in that** the protuberance (12) is distant from the ring (9) in the closed position by a second offset (16) so as to come into contact with the ring (9) only after an opening travel of the shutter equal to the second offset (16), preferably equal to a few millimeters and still preferably greater than the possible first offset (15).

10. The thermostatic valve according to any one of the two preceding claims, **characterized in that** the protuberance (12) merges with the flap (8).

11. The thermostatic valve according to any one of claims 8 to 10, **characterized in that** the ring (9) comprises at least one radial countersink (20) facing the protuberance (12) and going beyond a projection of the protuberance (12) on the ring (9) in order to maintain fluid communication with the leakage.

12. A fluid inlet (17) or fluid outlet (18) box, for thermostatic regulation of a fluid circuit, **characterized in that** it comprises a thermostatic valve according to any one of the preceding claims.

13. The box (17, 18) according to the preceding claim **characterized in that** the opening (3a, 3b) on the side of the thermostatic actuator (5) is split and adapted to be connected to the fluid circuit to be regulated, and the other opening (2) is adapted to be connected to a radiator (19).

14. An automatic thermal regulation circuit of a fluid, **characterized in that** it comprises a box (17, 18) according to any one of the two preceding claims, where the ring (9) is disposed on the side of the flap (8) presenting mainly the strongest pressure.
